(19) Europäisches Patentamt / European Patent Office / Office européen des brevets

(11) **EP 4 198 556 A1**

(12) **EUROPEAN PATENT APPLICATION**

(43) Date of publication:
**21.06.2023 Bulletin 2023/25**

(21) Application number: **21215616.0**

(22) Date of filing: **17.12.2021**

(51) International Patent Classification (IPC):
**G01S 7/4865** (2020.01)    **G01S 17/10** (2020.01)

(52) Cooperative Patent Classification (CPC):
**G01S 7/4865; G01S 17/10**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Nokia Technologies Oy**
**02610 Espoo (FI)**

(72) Inventors:
• **HERCEG, Marijan**
 **HR-31000 Osijek (HR)**
• **MATIC, Tomislav**
 **HR-31000 Osijek (HR)**

(74) Representative: **Swindell & Pearson Limited**
 **48 Friar Gate**
 **Derby DE1 1GY (GB)**

(54) **DETERMINING POSITION OF OBJECT BY OPTICAL TIME-OF-FLIGHT MEASUREMENT WITH BACKGROUND LIGHT REFERENCING**

(57) Examples of the disclosure relate to apparatus, methods and computer programs for positioning objects using pulses of light. The apparatus can be configured to obtain a reference measurement indicative of background light and obtain a first measurement and a second measurement. The first measurement can be obtained during emission of a light pulse and the second measurement can be obtained after emission of the light pulse.

The first measurement and second measurement are dependent upon the time of flight of the same light pulse. The apparatus is configured to use the first measurement, second measurement and reference measurement to determine a parameter dependent upon the time of flight of the light pulse. The parameter could be a distance to an object.

FIG. 3

**Description**

TECHNOLOGICAL FIELD

Examples of the disclosure relate to apparatus, methods and computer programs for positioning objects. Some relate to apparatus, methods and computer programs for positioning objects using pulses of light.

BACKGROUND

Positions of objects can be determined using pulses of light. A light pulse can be transmitted and reflected from an object to a light detector. The position of the object can be determined by calculating the time of flight of the light pulse. The time of flight of the light pulse is the time between the emission of the pulse and the detection of the pulse.

BRIEF SUMMARY

According to various, but not necessarily all, examples of the disclosure, there may be provided an apparatus comprising means for:

obtaining a reference measurement indicative of background light;
obtaining a first measurement during emission of a light pulse and a second measurement after emission of the light pulse such that the first measurement and second measurement are dependent upon the time of flight of the light pulse; and
using the first measurement, second measurement and reference measurement to determine a parameter dependent upon the time of flight of the light pulse.

The light pulse can be emitted by a light pulse emitter and the light can be detected by a light detector and the distance between the light pulse emitter and the light detector can be known to enable the distance to an object from which the light pulse is reflected to be determined.

The parameter dependent upon the time of flight of the light pulse can enable a distance between an object and the light detector and the light emitter to be determined.

The apparatus can be configured to obtain the measurements from detection circuitry and the reference measurement, first measurement and second measurements comprise samples of a voltage within the detection circuitry.

A first potion of detection circuitry can be used to obtain the first measurement and a second portion of detection circuitry is used to obtain the second measurement.

The first portion of the detection circuitry and the second portion of the detection circuitry can be actuated sequentially.

The first portion of the detection circuitry and the second portion of the detection circuitry are corresponding to each other.

A reference portion of detection circuitry may be used to obtain the reference measurement.

The detection circuitry may comprise means for enabling an output of the first portion to be compared to an output of the reference portion and means for enabling an output of the second portion to be compared to an output of the reference portion.

The means for enabling an output of the first portion to be compared to an output of the reference portion may comprise an operational amplifier.

The means for enabling an output of the second portion to be compared to an output of the reference portion may comprise an operational amplifier.

The second measurement may be obtained immediately after the emission of the light pulse.

The light pulse may be emitted by at least one of: light emitting diode, laser.

The light pulse may be detected by a photo diode.

According to various, but not necessarily all, examples of the disclosure, there may be provided a device comprising an apparatus as claimed in any preceding claim wherein the device comprises a personal communication device, a positioning device, a vehicle, a part of a vehicle.

According to various, but not necessarily all, examples of the disclosure there may be provided an apparatus comprising at least one processor; and at least one memory including computer program code, the at least one memory and the computer program code configured to, with the at least one processor, cause the apparatus at least to perform:

obtaining a reference measurement indicative of background light;
obtaining a first measurement during emission of a light pulse and a second measurement after emission of the light pulse such that the first measurement and second measurement are dependent upon the time of flight of the light pulse; and
using the first measurement, second measurement and reference measurement to determine a parameter dependent upon the time of flight of the light pulse.

According to various, but not necessarily all, examples of the disclosure, there may be provided a method comprising:

obtaining a reference measurement indicative of background light;
obtaining a first measurement during emission of a light pulse and a second measurement after emission of the light pulse such that the first measurement and second measurement are dependent upon the time of flight of the light pulse; and

using the first measurement, second measurement and reference measurement to determine a parameter dependent upon the time of flight of the light pulse.

According to various, but not necessarily all, examples of the disclosure, there may be provided a computer program comprising computer program instructions that, when executed by processing circuitry, cause:

obtaining a reference measurement indicative of background light;

obtaining a first measurement during emission of a light pulse and a second measurement after emission of the light pulse such that the first measurement and second measurement are dependent upon the time of flight of the light pulse; and

using the first measurement, second measurement and reference measurement to determine a parameter dependent upon the time of flight of the light pulse.

BRIEF DESCRIPTION

Some examples will now be described with reference to the accompanying drawings in which:

FIG. 1    shows an example system;
FIG. 2    shows an example method;
FIG. 3    shows example detection circuitry;
FIG. 4    shows example timings;
FIG. 5    shows an example method; and
FIG. 6    shows an example apparatus.

DETAILED DESCRIPTION

Examples of the disclosure relate to apparatus, methods and computer programs for positioning objects using pulses of light. In examples of the disclosure the accuracy and/or latency of the positioning can be improved by providing an efficient process for determining the background light and enabling this to be subtracted from any measurements.

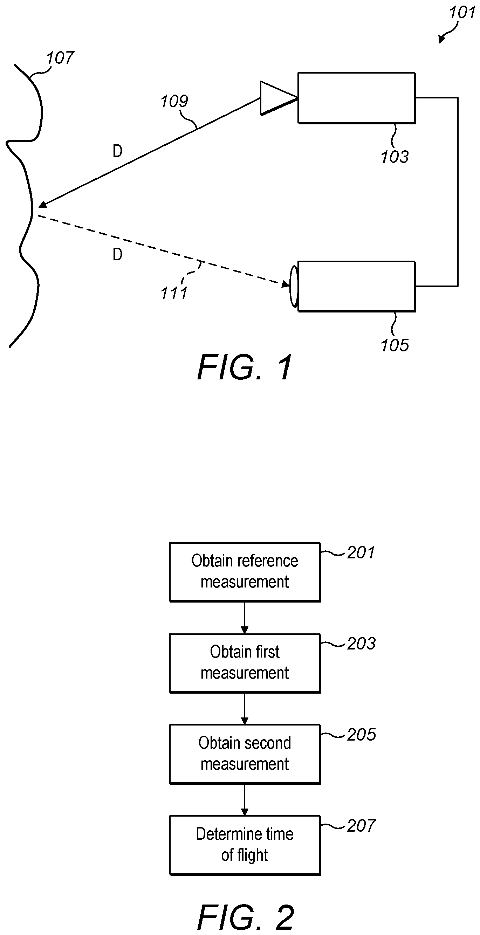

Fig. 1 shows an example system 101 that can be used to implement examples of the disclosure. The system 101 comprises a light emitter 103 and a light detector 105. The system 101 could comprise other components that are not shown in Fig. 1. For example, the system 101 could comprise detection circuitry and apparatus as described herein.

The system 101 can be configured to enable the distance D between an object 107 and the system 101 to be determined. The system 101 can be configured to enable the distance between the light emitter 103 and the light detector 105 and the object 107 to be detected.

The system 101 can be provided within any suitable type of device. In some examples the system 101 could be provided within a personal communication device such as a mobile phone or any other device that enables a user to interact with one or more communication networks. In some examples the system 101 could be provided within a positioning device that can be configured to determine the position of objects. In some examples the system 101 could be provided within a vehicle. For example, it could be provided as part of a sensor in a system to enable the proximity of objects to the vehicle to be located. In some examples the system 101 could be provided within part of the vehicle, for instance a digger or crane could comprise a cab that can be separate to the other parts of the vehicle. In such examples the system 101 could be provided within any suitable part of the vehicle. In some examples the system 101 could be used in a LiDAR (Light Detection and Ranging) device or any other suitable type of device.

The light emitter 103 can comprise any means that can be configured to transmit pulses of light. The light emitter 103 can comprise one or more light emitting diodes (LEDs), one or more lasers or any other suitable type of light source. In some examples the light emitter 103 can be configured to emit coherent pulses of light.

The light detector 105 can comprise any means that can be configured to detect incident light and provide an output voltage, or any other suitable parameter that is proportional to the amount of incident light. The light detector 105 can comprise one or more photo diodes or any other suitable means.

The light emitter 103 and the light detector 105 can be provided within the same device. For example, the light emitter 103 and the light detector 105 could be provided within a personal communication device or other type device. In other examples the light emitter 103 and the light detector 105 could be provided within different devices. For example, a positioning system could have light emitters 103 positioned in different locations to the light detectors 105. In such examples the relative positions of the light emitter 103 and the light detector 105 are known and the light emitter 103 and the light detector 105 are synchronized with each other. The light emitter 103 and the light detector 105 can be synchronized so that they are using the same timings.

The light emitter 103 and the light detector 105 are configured to determine the position of the object 107. In this example the object 107 comprises a face of a person. Different objects could be detected in other examples of the disclosure.

When the system 101 is in use, light pulses are emitted by the light emitter 103 as indicated by the arrow 109. The light pulses are incident on the object 107. The light pulses travel a distance D to the object 107. The light pulses are being reflected by the object 107 back towards the system 101 as indicated by the dashed arrow 111. The light pulses travel a distance D back towards the system 101 where they are incident upon the light detector 105. In response to the incident light pulse the light detector 105 provides an output that is proportional to the intensity of the light that is incident upon it. The light that is incident upon the light detector 105 will comprise both the reflected pulse of light and any background light.

The time interval between the pulse of light being emitted by the light emitter 103 and the reflected pulse of light being detected by the detector 105 can be used to determine the distance D and so can be used to determine the position of the object 107.

Examples of this disclosure enable the distance to be calculate accurately and quickly. This can improve the resolution of the system 101 because it can increase the number of measurements that can be made within a given time interval.

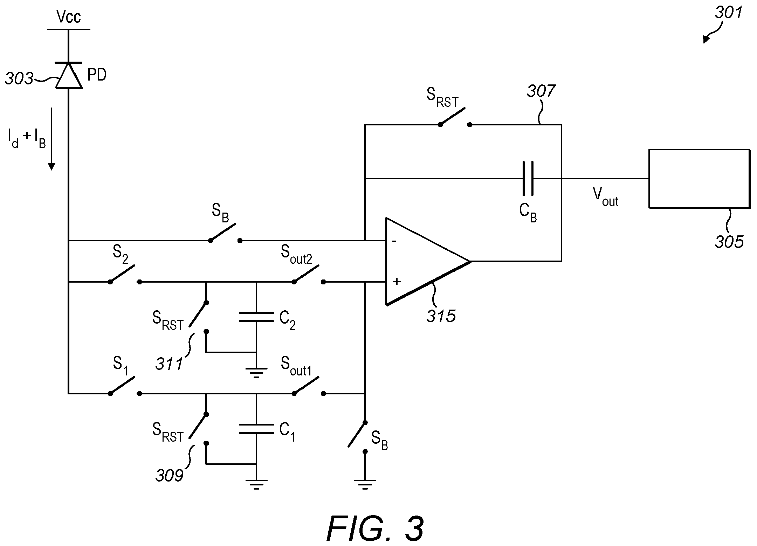

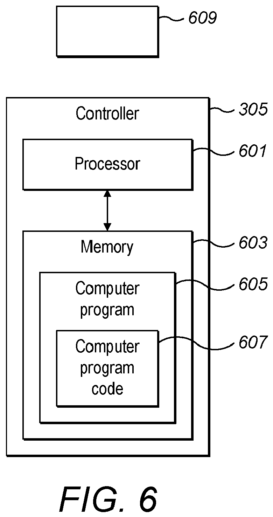

Fig. 2 shows an example method according to examples of the disclosure. The method could be implemented using an example system 101 as shown in Fig. 1. The method could be implemented using an apparatus 305 as shown in Figs. 3 and 6. The apparatus 305 can be configured to receive inputs from detection circuitry 301 as shown in Fig. 3.

At block 201 the method comprises obtaining a reference measurement. The reference measurement provides an indication of background light. For example, the reference measurement can provide an indication of the background light that is incident on a light detector 105. The reference measurement can be obtained before a pules of light is emitted by the light emitter 103.

The reference measurement can comprise a sample of a voltage, or any other suitable parameter, that is obtained from detection circuitry 301. The reference measurement can be obtained from a reference portion of the detection circuitry 301 or using any other suitable means.

At block 203 the method comprises obtaining a first measurement. The first measurement can be obtained during emission of a light pulse. The light pulse can be emitted by the light emitter 103 as shown in Fig. 1. The first measurement can provide an indication of the light being detected while the pulse is being emitted.

The first measurement can comprise a sample of a voltage, or any other suitable parameter, that is obtained from the detection circuitry. The first measurement can be obtained from a first portion of the detection circuitry 301 or using any other suitable means.

At block 205 the method comprises obtaining a second measurement. The second measurement can be obtained after emission of the light pulse. The second measurement can be obtained immediately after the emission of the light pulse. The second measurement can provide an indication of the light being detected immediately after the light pulse has been emitted. The same light pulse is used to obtain the first measurement and the second measurement.

The second measurement can comprise a sample of a voltage, or any other suitable parameter, that is obtained from the detection circuitry. The second measurement can be obtained from a second portion of the detection circuitry 301 or using any other suitable means.

The timings of the emission of the light pulse and the first and second measurements can be such that the first measurement and second measurement are dependent upon the time of flight of the light pulse.

At block 207 the method comprises using the first measurement and the second measurement and the reference measurement to determine a parameter dependent upon the time of flight of the light pulse. The parameter that is dependent upon the time of flight of the light pulse can be the distance between the object 107 and the system 101. In some examples the time of flight of the light pulse can be used to determine a position of the object 107.

Fig. 3 shows example detection circuitry 301 that could be used to implement some examples of the disclosure. The detection circuitry 301 could be provided within a system 101 such as the system shown in Fig. 1. In some examples the detection circuitry 301 can be provided within a mobile phone, personal electronics device or any other suitable type of device. In some examples the detection circuitry 301 could be provided within a vehicle or other device that monitors the objects 107 within the surroundings.

The detection circuitry 301can be configured to make measurements of the amount of light detected by the light detector 105. In the example of Fig. 3 the detection circuitry 301 is connected to a photodiode 303. The photodiode provides the light detector 105 in the system 101. The detection circuitry 301 is also coupled to an apparatus 305. The apparatus 305 can comprise a processing apparatus or any other suitable means that can be configured to obtain outputs from the detection circuitry 301 and use the outputs to determine a time of flight of a light pulse and/or a parameter dependent upon a time of flight of a light pulse. An example apparatus 305 is shown in Fig. 6.

The photodiode 303 provides an output current that is dependent upon the background light and any light emitted from the light emitter 103 that has been reflected from an object 107 and is not incident on the photodiode 303.

In this example the detection circuitry 301 comprises, a reference portion 307 a first portion 309 and a second portion 311. The detection circuitry 301 also comprises a plurality of switches S. The respective portions 307, 309, 311 are connected to the photodiode 303 via one or more switches S. This can enable the current from the photodiode 303 to be provided to the different portions 307, 309, 311 of the detection circuitry 301 as appropriate.

The switches S are configured to enable actuation of different parts of the detection circuitry 301 at different times. The switches S can be synchronized to the timing of a light emitter 103 so that the timings of opening and closing of the switches S can be controlled in dependence upon the timing of the emitting of the pulses of light.

The reference portion 307 comprises a reference capacitor $C_B$. The switches within the detection circuitry 301 can be configured to enable the reference capacitor $C_B$ to be charged. This can enable a reference measurement of the background light that is present when no pulse of light is emitted to be obtained.

The first portion 309 comprises a first capacitor $C_1$. The switches S within the detection circuitry 301 can be configured to enable the reference capacitor $C_1$ to be charged. This can enable a first measurement to be obtained. The first measurement is indicative of the light that is detected when a pulse of light is being emitted.

The second portion 311 comprises a second capacitor $C_2$. The switches within the detection circuitry 301 can be configured to enable the reference capacitor $C_2$ to be charged. This can enable a second measurement to be obtained. The second measurement is indicative of the light that is detected after a pulse of light has been emitted.

Both the first measurement and the second measurement are dependent upon the time of flight of the light pulse.

In the example of Fig. 3 the first portion 309 of the detection circuitry 301 and the second portion 311 of the detection circuitry 301 are corresponding. In this example the first portion 309 and the second portion 311 are identical, or substantially identical. The first portion 309 and the second portion 311 comprise identical, or substantially identical, components. For example, the first capacitor $C_1$ in the first portion 309 has the same value as the capacitor $C_2$ in the second portion 311. The first portion 309 and the second portion 311 can be used interchangeably depending upon the timing of the switches.

The detection circuitry 301 is configured so that the first portion 309 and the second portion 311 can be actuated sequentially. This can enable a measurement to be obtained from the first portion 309 and then a measurement can be obtained from the second portion 311 following the measurement from the first portion 309.

The detection circuitry 301 also comprises means for enabling an output of the first portion 309 to be compared to an output of the reference portion 307 and means for enabling an output of the second portion 307 to be compared to an output of the reference portion 307. The means can comprise one or more operational amplifiers or any other suitable component. In the example of Fig. 3 the means comprises an operational amplifier 315. The operational amplifier 315 enables the first measurement to be compared to the reference measurement. The operational amplifier 315 also enables the second measurement to be compared to the reference measurement. The second measurement can be compared to the reference measurement independently of the first measurement.

The detection circuitry 301 can provide outputs to the apparatus 305. In this example the outputs of the operational amplifier 315 can be provided to the apparatus 305. These outputs can be indicative of the difference between the first measurement and the reference measurement and the difference between the second measurement and the reference measurement. The apparatus 305 can be configured to use these outputs to determine the time of flight of the light pulse and/or any other parameter that is dependent upon the time of flight of the light pulse.

The detection circuitry 301 can comprise different portions and components in other examples of the disclosure.

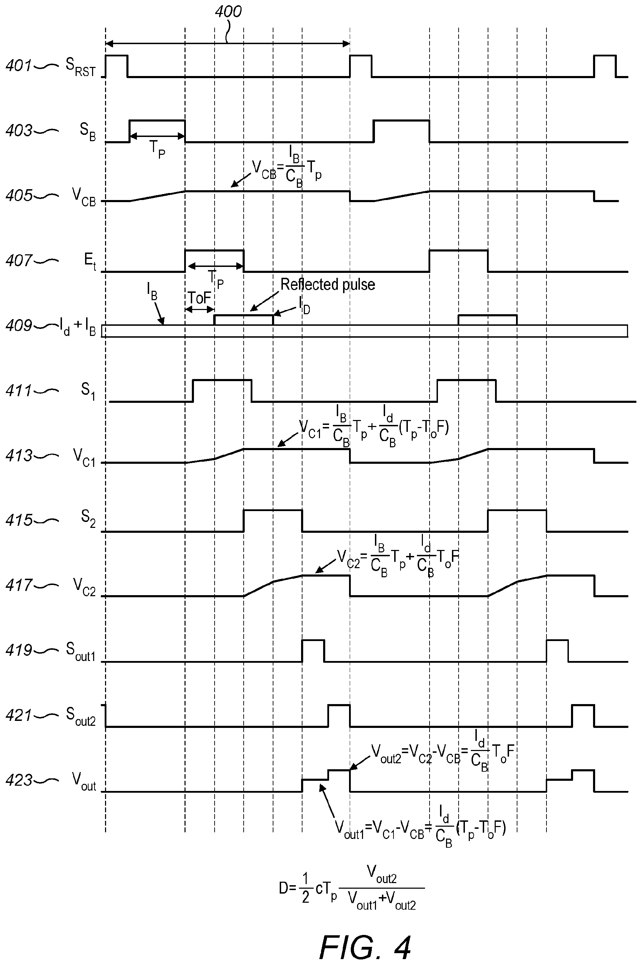

Fig. 4 shows example timings that could be used in some examples of the disclosure. These timings could be used with the detection circuitry 301 as shown in Fig. 3. The timings are shown for a measurement interval 400. The measurement intervals 400 can be repeated as often and as frequently as appropriate.

At block 401 the measurement interval begins by providing a signal to the switches $S_{RST}$. This signal causes actuation of the switches labeled $S_{RST}$ in the detection circuitry 301. This causes discharging of the capacitors $C_B$, $C_1$ and $C_2$ in the respective portions of the detection circuitry 301.

After the capacitors $C_B$, $C_1$ and $C_2$ have been discharged, at block 403, a signal is provided to the switch $S_B$. This causes actuation of the switch $S_B$. This enables the reference portion 307 of the detection circuitry 301 to be coupled to the photo diode 303. This enables charging of the reference capacitor $C_B$ in the reference portion 307 of the detection circuitry 301.

The switch $S_B$ can be actuated for a time interval $T_p$. This can enable the reference capacitor $C_B$ to be charged for the time interval $T_p$.

The reference capacitor $C_B$ is charged to a reference voltage $V_{CB}$. This is shown at block 405 in Fig. 4. As no pulse of light has been emitted at this point the current from the photodiode 303 only comprises a component dependent upon the background light. The reference voltage $V_{CB}$ can therefore be written as:

$$V_{CB} = \frac{I_B}{C_B} T_P$$

Where $I_B$ is the background light current, $C_B$ is the capacitance of reference capacitor and $T_p$ is the time interval for which the switch $S_B$ has been actuated. The reference voltage $V_{CB}$ is therefore directly proportional to the background light current. The reference voltage $V_{CB}$ can therefore provide a reference measurement that is indicative of the background light.

At block 407 a pulse of light Et is emitted by a light emitter 103. The pulse of light Et is emitted for a duration of time $T_p$. In this example, the duration of time $T_P$ for which the pulse of light $E_t$ is emitted can be the same as the duration of time $T_p$ for which the switch $S_B$ can be actuated. Other time intervals could be used in other examples.

The detection of the reflected light pulse by the photodiode 303 causes an increase in the output current from the photodiode 303. The current increases by an amount $I_d$ where $I_d$ is the current produced by the reflected pulse. This is shown at block 409 in Fig. 4.

There is a time delay between the pulse of light Et being emitted and the detection of the pulse of light by the photodiode 303 and the subsequent increase in current. This delay is labeled as ToF at block 409 of Fig. 4 as this delay is caused by the time of flight of the pulse of light.

To enable the reflected pulse of light to be detected a signal is provided to the first switch $S_1$ in the first portion 309 of the detection circuitry 303. This is shown at block 411 in Fig. 4. This signal is synchronized with the emission of the pulse of light Et so that that the first switch $S_1$ is actuated while the pulse of light Et is being emitted.

In the example of Fig. 4 the first switch $S_1$ is actuated for a time interval $T_p$. This time interval $T_p$ has the same duration as the duration of the emission of the pulse of light $E_t$. The actuation of the first switch $S_1$ is synchronized with the emission of the pulse of light $E_t$ so that first switch $S_1$ is opened when the emission begins and the first switch $S_1$ is closed when the emission ends.

The actuation of the first switch $S_1$ enables charging of the first capacitor $C_1$ in the first portion 309 of the detection circuitry 301. The first capacitor $C_1$ can be charged to a first voltage $V_{C1}$ as shown at block 413. Due to the delay in the pulse of light being detected first voltage $V_{C1}$ can be written as:

$$V_{C1} = \frac{I_B}{C_B}T_P + \frac{I_d}{C_B}(T_P - ToF)$$

In this example the capacitance of the first capacitor $C_1$ is the same as the capacitance of the reference capacitor $C_B$ and so $C_B$ has been used in place of $C_1$ in this equation. In this equation $I_d$ is the current due to the detected pulse and *ToF* is the time of flight of the pulse. The first voltage $V_{C1}$ is therefore proportional to both the background currents and the current caused by the detected pulse. The first voltage $V_{C1}$ can therefore provide a first measurement that is dependent upon the time of flight of the light pulse.

A signal is provided to the second switch $S_2$ in the second portion 311 of the detection circuitry 303. This is shown at block 415 in Fig. 4. This signal is synchronized with the emission of the pulse of light Et so that that the second switch $S_2$ is actuated immediately after the pulse of light Et has been emitted.

In the example of Fig. 4 the second switch $S_2$ is also actuated for a time interval $T_p$ that has the same duration as the duration of the emission of the pulse of light Et and the time interval for which the first switch $S_1$ is actuated. In this example the actuation of the second switch $S_2$ is synchronized with the emission of the pulse of light Et so that second switch $S_2$ is actuated immediately after the emission ends.

The actuation of the second switch $S_2$ enables charging of the second capacitor $C_2$ in the second portion 311 of the detection circuitry 301. The second capacitor $C_2$ can be charged to a second voltage $V_{C2}$ as shown at block 417. The second voltage $V_{C2}$ can be written as:

$$V_{C2} = \frac{I_B}{C_B}T_P + \frac{I_d}{C_B}ToF$$

In this example the capacitance of the second capacitor $C_2$ is the same as the capacitance of the reference capacitor $C_B$ and the first capacitor $C_1$ and so $C_B$ has been used in place of $C_2$ in this equation. The second voltage $V_{C2}$ is also proportional to both the background currents and the current caused by the detected pulse. The second voltage $V_{C2}$ can therefore provide a second measurement that is dependent upon the time of flight of the light pulse.

At block 419 a signal is provided to a first output switch $S_{out1}$ in the first portion 309 of the detection circuitry 301. This causes the first portion 309 of the detection circuitry 301 to be connected to the operational amplifier 315. This enables the operational amplifier 315 to provide an output voltage $V_{out}$ which is dependent upon the difference between the first measurement made by the first portion 309 and the reference measurement made by the reference portion 307.

At block 421 a signal is provided to a second output switch $S_{out2}$ in the second portion 311 of the detection circuitry 301. This causes the second portion 311 of the detection circuitry 301 to be connected to the operational amplifier 315. This enables the operational amplifier 315 to provide another output voltage $V_{out}$ which is dependent upon the difference between the second measurement made by the second portion 309 and the reference measurement made by the reference portion 307.

In the example of Fig. 4 the first output switch $S_{out1}$ is actuated immediately after the second measurement has been made. The second output switch $S_{out2}$ is then actuated immediately after the first output switch $S_{out1}$ has been actuated. In other examples different orders and/or timings for the actuation of these switches could be used.

Block 423 shows the different output voltages that are provided. The respective output voltages are given by:

$$V_{out1} = V_{C1} - V_{CB} = \frac{I_d}{C_B}(T_P - ToF)$$

$$V_{out2} = V_{C2} - V_{CB} = \frac{I_d}{C_B} ToF$$

The distance D from the system 101 to the object 107 can therefore be written as:

$$D = \frac{1}{2} c \, ToF = \frac{1}{2} cT_P \left( \frac{V_{out2}}{V_{out1} + V_{out2}} \right)$$

Where c is the speed of the light pulse.

Therefore, by sampling the output voltages $V_{out1}$ and $V_{out2}$ the apparatus 305 can determine the distance D from the system 101 to the object 107 or any other suitable parameter that is based upon the time of flight of the pulse.

The examples of the disclosure therefore enable the distance D, or any other appropriate parameter, to be obtained. The examples of the disclosure enable the current caused by the pulse of light to be separated from the current caused by the background light during a single measurement interval comprising only a single light pulse. There is no need for multiple pulses to make the measurement. Also the values for the current caused by the emitted light pulse does not need to be known or determined.

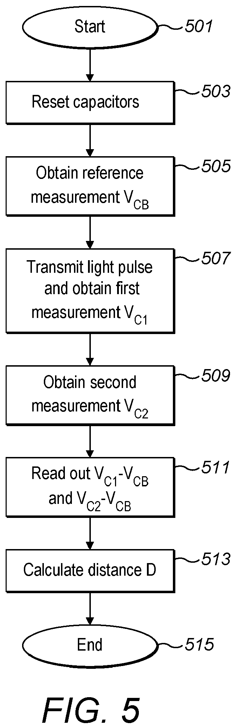

Fig. 5 shows another example method according to examples of the disclosure. The method of Fig. 5 could be implemented using an example system 101 as shown in Fig.

1. The method of Fig. 5 could be implemented using an apparatus 305 as shown in Figs. 3 and 6. The apparatus 305 can be configured to receive inputs from detection circuitry 301 as shown in Fig. 3.

At block 501 the method is started. The method could be started in response to a user input or any other suitable trigger event.

At block 503 the capacitors $C_B$, $C_1$ and $C_2$ in the detection circuitry 301 are reset. To reset the capacitors $C_B$, $C_1$ and $C_2$ any charge on the capacitors can be discharged. The capacitors can be reset by closing the appropriate switches $S_{RST}$ within the detection circuitry 301.

At block 505 a reference measurement is obtained. The reference measurement provides an indication of the background light levels. The reference measurement can be obtained by the reference portion 307 of the detection circuitry 301 before a light pulse is emitted.

At block 507 a light pulse is transmitted and a first measurement is obtained. The first measurement can be obtained while the light pulse is being emitted. The first measurement can be dependent upon the increase in current caused by the detection of the light pulse and also by the delay in the detection of the light pulse. The first measurement can be obtained by the first portion 309 of the detection circuitry 301.

At block 509 a second measurement is obtained. The second measurement can be obtained immediately after the light pulse has been emitted. The second measurement can be dependent upon the increase in current caused by the detection of the light pulse and also by the delay in the detection of the light pulse. The second measurement can be obtained by the second portion 311 of the detection circuitry 301.

At block 511 the difference between the first measurement and the reference measurement can be determined. The difference between the second measurement and the reference measurement can also be determined. These differences can be determined by connecting the appropriate portions of the detection circuitry 301 to the operational amplifier 315. For example, connecting the first portion 309 and the reference portion 307 to the operational amplifier 315 enables the difference between the first measurement and the reference measurement to be determined. Similarly connecting the second portion 311 and the reference portion 307 to the operational amplifier 315 enables the difference between the second measurement and the reference measurement to be determined.

At block 513 the difference between the first measurement and the reference measurement and the difference between the second measurement and the reference measurement can be used to calculate the distance D to the object. Once the distance D has been calculated the measurement can end at block 515.

The method of Fig. 5 can be repeated as often and as frequently as appropriate to enable measurements of the distance to an object 107 to be monitored.

Fig. 6 shows an example apparatus 305 that can be used to implement examples of the disclosure. The apparatus 305 illustrated in Fig. 6 can be a chip or a chip-set. The apparatus 305 can be coupled to detection circuitry 301 as shown in Fig. 3 and/or any other suitable type of circuitry.

In the example of Fig. 6 the apparatus 305 comprises a processor 601 and a memory 603.

In the example of Fig. 6 the implementation of the processor 601 can be as processor circuitry. In some examples the processor 601 can be implemented in hardware alone, have certain aspects in software including firmware alone or can be a combination of hardware and software (including firmware).

As illustrated in Fig. 6 the processor 601 can be implemented using instructions that enable hardware functionality, for example, by using executable instructions of a computer program 605 in a general-purpose or special-purpose processor 601 that can be stored on a computer readable storage medium (disk, memory etc.) to be executed by such a processor 601.

The processor 601 is configured to read from and write to the memory 603. The processor 601 can also comprise an output interface via which data and/or commands are output by the processor 601 and an input interface via which data and/or commands are input to the processor 601.

The memory 603 is configured to store a computer program 605 comprising computer program instructions (computer program code 607) that control the operation of the apparatus 305 when loaded into the processor 601. The computer program instructions, of the computer program 605, provide the logic and routines that enable the apparatus 305 to perform the methods illustrated in Figs. 2 and 5. The processor 305 by reading the memory 603 is able to load and execute the computer program 605.

The apparatus 305 therefore comprises: at least one processor 601; and at least one memory 603 including computer program code 607, the at least one memory 603 and the computer program code 607 configured to, with the at least one processor 601, cause the apparatus 305 at least to perform:

> obtaining a reference measurement indicative of background light;
> obtaining a first measurement during emission of a light pulse and a second measurement after emission of the light pulse such that the first measurement and second measurement are dependent upon the time of flight of the light pulse; and
> using the first measurement, second measurement and reference measurement to determine a parameter dependent upon the time of flight of the light pulse.

As illustrated in Fig. 6 the computer program 603 can arrive at the apparatus 305 via any suitable delivery mechanism 609. The delivery mechanism 609 can be, for example, a machine readable medium, a computer-readable medium, a non-transitory computer-readable storage medium, a computer program product, a memory device, a record medium such as a Compact Disc Read-Only Memory (CD-ROM) or a Digital Versatile Disc (DVD) or a solid-state memory, an article of manufacture that comprises or tangibly embodies the computer program 605. The delivery mechanism can be a signal configured to reliably transfer the computer program 605. The apparatus 305 can propagate or transmit the computer program 605 as a computer data signal. In some examples the computer program 605 can be transmitted to the apparatus 305 using a wireless protocol such as Bluetooth, Bluetooth Low Energy, Bluetooth Smart, 6LoWPan (IP$_v$6 over low power personal area networks) ZigBee, ANT+, near field communication (NFC), Radio frequency identification, wireless local area network (wireless LAN) or any other suitable protocol.

The computer program 605 comprises computer program instructions for causing an apparatus 105 to perform at least the following:

> obtaining a reference measurement indicative of background light;
> obtaining a first measurement during emission of a light pulse and a second measurement after emission of the light pulse such that the first measurement and second measurement are dependent upon the time of flight of the light pulse; and

using the first measurement, second measurement and reference measurement to determine a parameter dependent upon the time of flight of the light pulse.

The computer program instructions can be comprised in a computer program 605, a non-transitory computer readable medium, a computer program product, a machine readable medium. In some but not necessarily all examples, the computer program instructions can be distributed over more than one computer program 605.

Although the memory 603 is illustrated as a single component/circuitry it can be implemented as one or more separate components/circuitry some or all of which can be integrated/removable and/or can provide permanent/semi-permanent/ dynamic/cached storage.

Although the processor 601 is illustrated as a single component/circuitry it can be implemented as one or more separate components/circuitry some or all of which can be integrated/removable. The processor 601 can be a single core or multi-core processor.

References to "computer-readable storage medium", "computer program product", "tangibly embodied computer program" etc. or a "controller", "computer", "processor" etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other processing circuitry. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

As used in this application, the term "circuitry" can refer to one or more or all of the following:

> (a) hardware-only circuitry implementations (such as implementations in only analog and/or digital circuitry) and
> (b) combinations of hardware circuits and software, such as (as applicable):
>
> > (i) a combination of analog and/or digital hardware circuit(s) with software/firmware and
> > (ii) any portions of hardware processor(s) with software (including digital signal processor(s)), software, and memory(ies) that work together to cause an apparatus, such as a mobile phone or server, to perform various functions and

(c) hardware circuit(s) and or processor(s), such as a microprocessor(s) or a portion of a microprocessor(s), that requires software (e.g. firmware) for operation, but the software might not be present when it is not needed for operation.

This definition of circuitry applies to all uses of this term in this application, including in any claims. As a further example, as used in this application, the term circuitry also covers an implementation of merely a hardware circuit or processor and its (or their) accompanying software and/or firmware. The term circuitry also covers, for example and if applicable to the particular claim element, a baseband integrated circuit for a mobile device or a similar integrated circuit in a server, a cellular network device, or other computing or network device.

The blocks illustrated in Figs. 2 and 5 can represent steps in a method and/or sections of code in the computer program 605. The illustration of a particular order to the blocks does not necessarily imply that there is a required or preferred order for the blocks and the order and arrangement of the block can be varied. Furthermore, it can be possible for some blocks to be omitted.

Examples of the disclosure therefore enable measurement of a distance to an object, or other similar parameters, using a single pulse of light and a single measurement interval. This can enable the data relating to the distance to be obtained quickly and increase the number of frames per second which increases the resolution time of a sensor. Furthermore, the detection circuitry 301 and systems 101 that are needed to implement the solution are not overly complex which makes them suitable for use in a wide range of applications.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to "comprising only one..." or by using "consisting".

In this description, reference has been made to various examples. The description of features or functions in relation to an example indicates that those features or functions are present in that example. The use of the term 'example' or 'for example' or 'can' or 'may' in the text denotes, whether explicitly stated or not, that such features or functions are present in at least the described example, whether described as an example or not, and that they can be, but are not necessarily, present in some of or all other examples. Thus 'example', 'for example', 'can' or 'may' refers to a particular instance in a class of examples. A property of the instance can be a property of only that instance or a property of the class or a property of a sub-class of the class that includes some but not all of the instances in the class. It is therefore implicitly disclosed that a feature described with reference to one example but not with reference to another example, can where possible be used in that other example as part of a working combination but does not necessarily have to be used in that other example.

Although examples have been described in the preceding paragraphs with reference to various examples, it should be appreciated that modifications to the examples given can be made without departing from the scope of the claims.

Features described in the preceding description may be used in combinations other than the combinations explicitly described above.

Although functions have been described with reference to certain features, those functions may be performable by other features whether described or not.

Although features have been described with reference to certain examples, those features may also be present in other examples whether described or not.

The term 'a' or 'the' is used in this document with an inclusive not an exclusive meaning. That is any reference to X comprising a/the Y indicates that X may comprise only one Y or may comprise more than one Y unless the context clearly indicates the contrary. If it is intended to use 'a' or 'the' with an exclusive meaning then it will be made clear in the context. In some circumstances the use of 'at least one' or 'one or more' may be used to emphasis an inclusive meaning but the absence of these terms should not be taken to infer any exclusive meaning.

The presence of a feature (or combination of features) in a claim is a reference to that feature or (combination of features) itself and also to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

Whilst endeavoring in the foregoing specification to draw attention to those features believed to be of importance it should be understood that the Applicant may seek protection via the claims in respect of any patentable feature or combination of features hereinbefore referred to and/or shown in the drawings whether or not emphasis has been placed thereon.

**Claims**

**1.** An apparatus comprising means for:

obtaining a reference measurement indicative of background light;

obtaining a first measurement during emission of a light pulse and a second measurement after emission of the light pulse such that the first measurement and second measurement are dependent upon the time of flight of the light pulse; and

using the first measurement, second measurement and reference measurement to determine a parameter dependent upon the time of flight of the light pulse.

2. An apparatus as claimed in claim 1 wherein the light pulse is emitted by a light pulse emitter and the light is detected by a light detector and the distance between the light pulse emitter and the light detector is known to enable the distance to an object from which the light pulse is reflected to be determined.

3. An apparatus as claimed in claim 2 wherein the parameter dependent upon the time of flight of the light pulse enables a distance between an object and the light detector and the light emitter to be determined.

4. An apparatus as claimed in any preceding claim wherein the apparatus is configured to obtain the measurements from detection circuitry and the reference measurement, first measurement and second measurement comprise samples of a voltage within the detection circuitry.

5. An apparatus as claimed in claim 4 wherein a first portion of detection circuitry is used to obtain the first measurement and a second portion of detection circuitry is used to obtain the second measurement.

6. An apparatus as claimed in claim 5 wherein the first portion of the detection circuitry and the second portion of the detection circuitry are actuated sequentially.

7. An apparatus as claimed in any of claims 5 to 6 wherein the first portion of the detection circuitry and the second portion of the detection circuitry are corresponding to each other.

8. An apparatus as claimed in any of claims 5 to 7 wherein a reference portion of detection circuitry is used to obtain the reference measurement.

9. An apparatus as claimed in claim 8 wherein the detection circuitry comprises means for enabling an output of the first portion to be compared to an output of the reference portion and means for enabling an output of the second portion to be compared to an output of the reference portion.

10. An apparatus as claimed in any preceding claim wherein the second measurement is obtained immediately after the emission of the light pulse.

11. An apparatus as claimed in any preceding claim wherein the light pulse is emitted by at least one of: light emitting diode, laser.

12. An apparatus as claimed in any preceding claim wherein the light pulse is detected by a photo diode.

13. A device comprising an apparatus as claimed in any preceding claim wherein the device comprises a personal communication device, a positioning device, a vehicle, a part of a vehicle.

14. A method comprising:

obtaining a reference measurement indicative of background light;

obtaining a first measurement during emission of a light pulse and a second measurement after emission of the light pulse such that the first measurement and second measurement are dependent upon the time of flight of the light pulse; and

using the first measurement, second measurement and reference measurement to determine a parameter dependent upon the time of flight of the light pulse.

15. A computer program comprising computer program instructions that, when executed by processing circuitry, cause:

obtaining a reference measurement indicative of background light;

obtaining a first measurement during emission of a light pulse and a second measurement after emission of the light pulse such that the first measurement and second measurement are dependent upon the time of flight of the light pulse; and

using the first measurement, second measurement and reference measurement to determine a parameter dependent upon the time of flight of the light pulse.

FIG. 1

FIG. 2

FIG. 3

$$D = \frac{1}{2} c T_p \frac{V_{out2}}{V_{out1} + V_{out2}}$$

*FIG. 4*

Start ~*501*

↓

Reset capacitors ~*503*

↓

Obtain reference
measurement $V_{CB}$ ~*505*

↓

Transmit light pulse
and obtain first
measurement $V_{C1}$ ~*507*

↓

Obtain second
measurement $V_{C2}$ ~*509*

↓

Read out $V_{C1}$-$V_{CB}$
and $V_{C2}$-$V_{CB}$ ~*511*

↓

Calculate distance D ~*513*

↓

End ~*515*

*FIG. 5*

609

Controller — 305

Processor — 601

Memory — 603

Computer program — 605

Computer program code — 607

## FIG. 6

Europäisches
Patentamt

European
Patent Office

Office européen
des brevets

# EUROPEAN SEARCH REPORT

Application Number

EP 21 21 5616

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 10 794 695 B2 (MURATA MANUFACTURING CO [JP]) 6 October 2020 (2020-10-06) * columns 3-9; figures 4-6 * | 1-15 | INV. G01S7/4865 G01S17/10 |
| X | US 2016/161611 A1 (ITO JUNJI [JP] ET AL) 9 June 2016 (2016-06-09) * paragraphs [0076] – [0121]; figure 10 * | 1-15 | |
| X | US 11 002 836 B2 (ROCKWELL AUTOMATION TECH INC [US]) 11 May 2021 (2021-05-11) * columns 6-22; figure 6 * | 1-15 | |
| X | US 10 768 301 B2 (XENOMATIX NV [BE]) 8 September 2020 (2020-09-08) * columns 15-22; figures 3a,8 * | 1-15 | |

TECHNICAL FIELDS
SEARCHED (IPC)

G01S

The present search report has been drawn up for all claims

| Place of search | Date of completion of the search | Examiner |
|---|---|---|
| Munich | 11 May 2022 | Damp, Stephan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

......................................................................

& : member of the same patent family, corresponding document

EPO FORM 1503 03.82 (P04C01)

**EP 4 198 556 A1**

## ANNEX TO THE EUROPEAN SEARCH REPORT
## ON EUROPEAN PATENT APPLICATION NO.

EP 21 21 5616

11-05-2022

| Patent document cited in search report | | | Publication date | Patent family member(s) | | | Publication date |
|---|---|---|---|---|---|---|---|
| US 10794695 | B2 | | 06-10-2020 | CN | 107533136 | A | 02-01-2018 |
| | | | | JP | 6406449 | B2 | 17-10-2018 |
| | | | | JP | WO2016208214 | A1 | 26-10-2017 |
| | | | | US | 2018045513 | A1 | 15-02-2018 |
| | | | | WO | 2016208214 | A1 | 29-12-2016 |
| US 2016161611 | A1 | | 09-06-2016 | CN | 105452807 | A | 30-03-2016 |
| | | | | JP | 6459069 | B2 | 30-01-2019 |
| | | | | JP | WO2015025497 | A1 | 02-03-2017 |
| | | | | US | 2016161611 | A1 | 09-06-2016 |
| | | | | US | 2019072673 | A1 | 07-03-2019 |
| | | | | WO | 2015025497 | A1 | 26-02-2015 |
| US 11002836 | B2 | | 11-05-2021 | EP | 3572835 | A1 | 27-11-2019 |
| | | | | US | 2019346540 | A1 | 14-11-2019 |
| US 10768301 | B2 | | 08-09-2020 | CN | 111465871 | A | 28-07-2020 |
| | | | | EP | 3625589 | A1 | 25-03-2020 |
| | | | | JP | 2021507218 | A | 22-02-2021 |
| | | | | KR | 20200096828 | A | 13-08-2020 |
| | | | | US | 2020124726 | A1 | 23-04-2020 |
| | | | | WO | 2019115839 | A1 | 20-06-2019 |

EPO FORM P0459